Europäisches Patentamt

European Patent Office

Office européen des brevets

(11) Veröffentlichungsnummer: **0 175 964**
**B1**

(12) **EUROPÄISCHE PATENTSCHRIFT**

(45) Veröffentlichungstag der Patentschrift: **24.10.90**

(51) Int. Cl.⁵: **C 04 B 35/56**

(21) Anmeldenummer: **85111053.6**

(22) Anmeldetag: **02.09.85**

(54) Verfahren zur Herstellung von Carbid-Borid-Erzeugnissen und deren Verwendung.

(30) Priorität: **26.09.84 DE 3435345**

(43) Veröffentlichungstag der Anmeldung:
**02.04.86 Patentblatt 86/14**

(45) Bekanntmachung des Hinweises auf die
Patenterteilung:
**24.10.90 Patentblatt 90/43**

(84) Benannte Vertragsstaaten:
**AT BE CH DE FR GB IT LI NL SE**

(56) Entgegenhaltungen:
**DE-A-2 451 774**
**DE-C-1 027 883**
**US-A-4 029 000**

(73) Patentinhaber: **Max-Planck-Gesellschaft zur
Förderung der Wissenschaften e.V.
Bunsenstrasse 10
D-3400 Göttingen (DE)**

(72) Erfinder: **Petzow, Günter, Prof. Dr.
Tannenweg 7
D-7022 Leinfelden-Echterdingen (DE)**
Erfinder: **Hofmann, Heinrich, Dr. Dipl.-Ing.
Panoramastrasse 65
D-7016 Gerlingen (DE)**
Erfinder: **Weiss, Kurt, Dr.-Phys.
Buchenweg 9
FL-9490 Vaduz (LI)**

(74) Vertreter: **Berg, Wilhelm, Dr.
Mauerkircherstrasse 45
D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Mischungen, Legierungen bzw. keramische Werkstoffe, die Carbide, wie z.B. Borcarbid, Boride wie Chromborid, Zirkonborid, Titanborid, Molybdänborid, Tantalborid, Wolframborid und Vanadinborid gegebenenfalls neben Nitriden enthalten, sind bekannt. Diese Stoffe weisen sehr hohe Härte auf und können beispielsweise als Sandstrahl-Düsen, zur Behandlung von Schleifscheiben und zur Herstellung von Gegenständen, die sonstigen erheblichen Belastungen unterliegen, verwendet werden. Es ist bekannt, daß Legierungen und Mischungen auf Borcarbidbasis zwar sehr gute, Werkstoff-abtragende Eigenschaften aufweisen, jedoch in manchen Werkstoffeigenschaften nicht befriedigen (Powder Metallurgy International, 1983, Band 5, 201—205). Dies gilt auch für solche Borcarbidwerkstoffe, welche weitere Bestandteile, wie Boride und/oder Nitride enthalten.

Der vorliegenden Erfindung liegt die Aufgabe zugrunde, ein Verfahren zur Verfügung zu stellen, welches Borcarbidwerkstoffe mit voll befriedigenden Eigenschaften zugänglich macht, die, insbesondere als Formkörper, für Zwecke hoher Belastungen eingesetzt werden können.

Diese Aufgabe wird gelöst durch das im vorangehenden Patentanspruch 1 genannte Verfahren.

Es ist zwar schon aus der DE—A—2 541 774 bekannt, Formkörper aus Borcarbid, Titandiborid und Wolframcarbidkugeln herzustellen. Abgesehen davon, daß bei der vorliegenden Erfindung elementares Bor zugegen ist, findet dabei eine echte chemische Reaktion unter Umwandlung der Übergangsmetallcarbide in Boride in situ statt.

Das bei dem erfindungsgemäßen Verfahren verwendete feinteilige bzw. feinkörnige Borcarbid hat meist eine Teilchengröße im Bereich von 0,5—etwa 50 µm, insbesondere im Bereich von 1—10 µm. Bevorzugt zur Durchführung des Verfahrens ist $B_4C$, wenn auch die Verwendung anderer Borcarbide nicht ausgeschlossen ist. Als vorteilhaft hat es sich erwiesen, auch das Bor in feinteiliger Form, insbesondere in amorpher Form einzusetzen.

Das erfindungsgemäß geforderte innige in Kontakt bringen erfolgt durch Mischen, wobei übliche Mischvorrichtungen wie Rührwerke, Taumelmischer und dgl. verwendet werden können.

Für die Durchführung des Verfahrens hat es sich als günstig erwiesen, wenn das innige Mischen in Gegenwart von Silizium und/oder Kobalt erfolgt, wobei namentlich das metallische Silizium in feinverteilter Form vorliegt.

Ganz besonders vorteilhaft ist es, wenn als Übergangsmetallcarbide ein Wolframcarbid und/oder Titancarbid verwendet wird. Bei der Durchführung des Verfahrens sind regelmäßig WC und/oder TiC bevorzugt. Der Mischvorgang kann durch Attritieren wesentlich gefördert werden. Hiebei wird insbesondere mit Kugeln aus Übergangsmetallcarbid und Kobalt wie WC-Co oder WC-TiC-Co gearbeitet, wobei auf diese Weise das vor allem als Verfahrenshilfsmittel wirkende Kobalt in Form einer Legierung mit den Übergangsmetallcarbiden in das Verfahren eingebracht werden kann. Die Hartmetallegierungs-Kugeln haben meist einen Durchmesser im Bereich von 0,5—5 mm, insbesondere von etwa 1—2 mm. Als günstig hat es sich dabei gezeigt, wenn im Attritor mit einem Wolframcarbid-Kobalt- bzw. Wolframcarbid-Titancarbid-Kobalt-Hartmetallrührer gearbeitet wird. Als organische Lösungsmittel können beim Attritieren inerte Medien, wie gesättigte Kohlenwasserstoffe, namentlich Arylkohlenwasser sowie Benzol, ferner Alkohole, wie aliphatische $C_1$—$C_5$ Alkanole, insbesondere Propanol, verwendet werden.

Wenn auch zur Durchführung des Verfahrens Wolframcarbid und/oder Titancarbid ganz bevorzugt sind, so können diese Carbide, zumindest teilweise, auch durch andere Übergangsmetallcarbide ersetzt werden, wie Zirkoncarbid, Chromcarbid, Tantalcarbid.

Obwohl die Reihenfolge des Mischens nicht kritisch erscheint, hat sich jedoch bewährt, wenn man zunächst das Borcarbidpulver mit Bor und Silizium mischt und dann das Pulver zusammen mit dem Übergangsmetallcarbid, also insbesondere mit Wolframcarbid und Kobalt oder Wolframcarbid, Titancarbid und Kobalt, gegebenenfalls in Gegenwart eines organischen Lösungsmittels, vermahlt. Besonders bewährt hat es sich, wenn des Mahl-Mischen bis auf eine Borcarbid-Teilchengröße von unter 1 µm erfolgt. Dabei können Mischungen hergestellt werden, welche Borcarbid-Teilchen von 0,1—0,5 µm, oder selbst noch kleiner, als wesentlichen Bestandteil enthalten.

Zur Durchführung des Verfahrens haben sich Mischungen bevorzugt aus

    25—75 Gew.-% Borcarbid
    15—40 Gew.-% Bor
      0—8  Gew.-% Silizium
    10—50 Gew.-% Wolfram- und/oder
         Titancarbid
      0—6  Gew.-% Kobalt ergeben. Dabei sollte die Bormenge so groß sein, daß sie zumindest ausreicht, das eingebrachte Übergangsmetallcarbid in das entsprechende Borid umzuwandeln und vorzugsweise auch noch zum Abbinden des freigesetzten carbidischen Kohlenstoffs befähigt ist.

Soll das so erhaltene Erzeugnis durch heißes Verpressen des Pulvers, also auf üblichem pulvermetallurgischem Wege in Formkörper überführt werden, so erfolgt die Heißverpressung im Vakuum oder in einer inerten Schutzgasatmosphäre, insbesondere einem Edelgas. Eine kaltisostatische Vorverdichtung des innigen Gemischs kann einer solchen Heißverpressung vorgeschaltet werden. Die Heißverpressung selbst erfolgt meist bei Temperaturen zwischen 1550° und 1850°C.

Gegenstand des Schutzes sind auch Formkörper aus Borcarbid-Wolframborid und/oder Titanborid enthaltenden, von Übergangsmetallcarbiden und von freiem Kohlenstoff freie Legierungen, die auch nach dem vorhergehenden Verfahren erhältlich sind.

Es sind zwar aus der DE—C—1 027 883 bereits Borcarbid und Übergangsmetallboride enthaltende Werkstoffe bekannt, die jedoch auch noch Metallcarbide und freien Kohlenstoff enthalten. Überraschenderweise hat sich aber gezeigt, daß die erfindungsgemäßen Formkörper, die frei von metallischen Carbiden und von freiem Kohlenstoff sind, weit überlegene mechanische Eigenschaften aufweisen. Werkstoffe der erfindungsgemäßen Art werden häufig auch als keramische Werkstoffe oder als Hartmetall-Legierungen bezeichnet. Die erfindungsgemäß hergestellten Formkörper können insbesondere als Werkstoffe zur Herstellung von Verschleißteilen, insbesondere von Schneidwerkzeugen, vor allem zum Gesteinsabbau oder zur Metallbearbeitung, zur Panzerung und dgl. verwendet werden. In den erfindungsgemäß hergestellten Produkten liegt die carbidische Phase regelmäßig als $B_4C$ vor, während bei Verwendung von Wolframcarbid und Titancarbid die boridische Phase regelmäßig als $W_2B_5$ bzw. $TiB_2$ vorliegt.

Beispiel

57 Gew.-% Borcarbidpulver (1—7 µm), 35,5% amorphes Bor (95 %ig) und 7,5 Gew.-% feinteiliges Si werden 1h in einem Taumelmischer gemischt. 40 g dieser Mischung werden in einem Attritor mit 3 kg Hartmetallkugeln (Wolframcarbid-Kobalt oder Wolfram-Titancarbid-Kobalt) und einem Hartmetallrührer (1000 Upm) in Propanol gemahlen. Die Mahldauer beträgt maximal 4h. Dann wird das attritierte Pulver in einem Rotationsverdampfer von Propanol getrennt und getrocknet.

Es erfolgt nun ein Aufmahlen des Pulvers in einer WC-Co Kugelmühle und Absieben der groben, eim Aufmahlen nicht zerfallenen Agglomerate (Maschenweite des Siebes 0,15 mm). In einer Presse werden Tabletten mit einer einaxialen Matrize hergestellt, wobei ein kaltisostatisches Nachverdichten z.B. mit 635 MPa erfolgen kann. Das Heißpressen erfolgt im Vakuum. Die Matrize besteht aus Graphit, der mit Bornitrid beschichtet ist, um eine Reaktion zwischen dem Pulver und dem Graphit zu verhindern. Es wird mit 25 MPa belastet, auf 1000°C aufgeheizt und während 45 min bei dieser Temperatur gehalten. Anschließend wird der Preßdruck auf 35 MPa erhöht und mit 40 K/min auf 1800°C aufgeheizt. Die Haltezeit bei 1800°C beträgt 3 min. Anschließend wird innerhalb 5 min unterhalb 1000°C abgekühlt, wobei der Druck auf 10 MPa gesenkt wird.

**Patentansprüche**

1. Verfahren zur Herstellung von Werkstoffen und Formkörpern auf der Grundlage von Borcarbid-Übergangsmetallborid, dadurch gekennzeichnet, daß man feinteiliges Borcarbid mit Bor und Übergangsmetallcarbiden in innigen Kontakt bringt und dann, zur Herstellung von Formkörpern, das erhaltene Pulver heiß verpreßt.

2. Verfahren gemäß Patentanspruch 1, dadurch gekennzeichnet, daß man auch das Bor in feinteiliger, insbesondere amorpher Form verwendet.

3. Verfahren gemäß Patentanspruch 1 oder 2, dadurch gekennzeichnet, daß das innige Vermischen in Gegenwart von vorzugsweise feinteiligem Silizium und/oder Kobalt erfolgt.

4. Verfahren gemäß einem der vorhergehenden Patentansprüche, dadurch gekennzeichnet, daß man als Übergangsmetallcarbid ein Wolframcarbid und/oder Titancarbid verwendet.

5. Verfahren gemäß einem der vorhergehenden Patentansprüche, dadurch gekennzeichnet, daß man das Übergangsmetallcarbid und Kobalt in Form von Hartmetallegierungskugeln, vorzugsweise mit einem Durchmesser von 0,5—2,5 mm, verwendet.

6. Verfahren gemäß einem der vorhergehenden Patentansprüche, dadurch gekennzeichnet, daß man zunächst das Borcarbidpulver mit Bor und Silizium mischt und dann das Pulver zusammen mit Wolframcarbid und Kobalt oder Wolframcarbid, Titancarbid und Kobalt, vorzugsweise in Gegenwart eines organischen Lösungsmittels vermahlt.

7. Verfahren gemäß einem der vorhergehenden Patentansprüche, dadurch gekennzeichnet, daß man das Wolfram- oder Titancarbid zumindest teilweise durch andere Übergangsmetallcarbide, vorzugsweise durch Zirkoncarbid, Chromcarbid und/oder Tantalcarbid ersetzt.

8. Verfahren gemäß einem der vorhergehenden Patentansprüche, dadurch gekennzeichnet, daß das Vermahlen bis auf eine Borcarbid-Teilchengröße von unter 1 µm erfolgt.

9. Verfahren gemäß einem der vorhergehenden Patentansprüche, dadurch gekennzeichnet, daß

25—75 Gew.-% Borcarbid
15—40 Gew.-% Bor
0—8 Gew.-% Silizium
10—50 Gew.-% Wolfram- und/oder Titancarbid
0—6 Gew.-% Kobalt gemischt werden.

10. Von Übergangsmetallcarbiden und von freiem Kohlenstoff freie Borcarbid-Wolframborid- und Borcarbid-Wolframborid-Titanborid-Formkörper, erhältlich nach einem der vorhergegangenen Patentansprüche.

**Revendications**

1. Procédé pour la fabrication de matières premières et de corps de forme à base de carbure de bore/borure de métal de transition, caractérisé par le fait que l'on met en contact intime un carbure de bore finement divisé avec du bore et des carbures de métaux de transition, puis que l'on comprime à chaud la poudre obtenue pour obtenir des corps de forme.

2. Procédé selon la revendication 1, caractérisé par le fait que l'on utilise aussi le bore sous forme finement divisée, en particulier sous forme amorphe.

3. Procédé selon la revendication 1 ou la revendication 2, caractérisé par le fait que le mélange intime se fait en présence de silicium et/ou de cobalt de préférence finement divisés.

4. Procédé selon l'une des revendications précédentes, caractérisé par le fait que l'on utilise, en tant que carbure de métal de transition, un carbure de tungstène et/ou un carbure de titane.

5. Procédé selon l'une des revendications précédentes, caractérisé par le fait que l'on utilise le carbure de métal de transition et le cobalt sous forme de billes d'alliage dur, de préférence d'un diamètre de 0,5 à 2,5 mm.

6. Procédé selon l'une des revendications précédentes, caractérisé par le fait que tout d'abord on mélange la poudre de carbure de bore avec le bore et le silicium et qu'ensuite on broie la poudre avec du carbure de tungstène et du cobalt, ou du carbure de tungstène, du carbure de titane et du cobalt, de préférence en présence d'un solvant organique.

7. Procédé selon l'une des revendications précédentes, caractérisé par le fait que l'on remplace, au moins partiellement, le carbure de tungstène ou de titane par d'autres carbures de métaux de transition, de préférence, par le carbure de zirconium, le carbure de chrome et/ou le carbure de tantale.

8. Procédé selon l'une des revendications précédentes, caractérisé par le fait que le broyage se poursuit jusqu'à une grosseur de particules de carbure de bore inférieure à un micron.

9. Procédé selon l'une des revendications précédentes, caractérisé par le fait que l'on mélange:

    25 à 75% en poids de carbure de bore,
    15 à 40% en poids de bore,
     0 à 8%   en poids de silicium,
    10 à 50% en poids de carbure de tungstène et/ou de carbure de titane,
     0 à 6%   en poids de cobalt

10. Corps de forme en carbure de bore-borure de tungstène et carbure de bore-borure de tungstène-borure de titane exempts de carbures de métaux de transition et de carbone libre, povuant être obtenus selon l'une des revendications précédentes.

**Claims**

1. Method for the production of materials and shapes based on boron-carbide-transition-metal boride, characterised in that fine-particle boron carbide is brought into close contact with boron and transition-metal carbides, and the thus obtained powder is then compressed hot for the purpose of producing shapes.

2. Method according to patent claim 1, characterised in that boron is also used in fine-particle, in particular amorphous form.

3. Method according to patent claim 1 or 2, characterised in that the close mixing is done in the presence of preferably fine-particle silicon and/or cobalt.

4. Method according to one of the above patent claims, characterised in that a tungsten carbide and/or a titanium carbide is used as transition-metal carbide.

5. Method according to one of the above patent claims, characterised in that the transition-metal carbide and cobalt are used in the form of carbide-alloy balls, preferably with a diameter of 0.5—2.5 mm.

6. Method according to one of the above patent claims, characterised in that initially the borcarbide powder is mixed with bor and silicon, and then the powder is ground together with tungsten carbide and cobalt or tungsten carbide, titanium carbide and cobalt, preferably in the presence of an organic solvent.

7. Method according to one of the above patent claims, characterised in that the tungsten- or titanium carbide is at least partially replaced by other transition-metal carbides, preferably by zircon carbide, chromium carbide and/or tantalum carbide.

8. Method according to one of the previous patent claims, characterised in that the grinding goes down to a boron-carbide particle size of under 1 μm.

9. Method according to one of the above patent claims, characterised in that

    25—75 weight-% boron carbide
    15—40 weight-% boron
     0—8   weight-% silicon
    10—50 weight-% tungsten- and/or titanium carbide
     0—6   weight-% cobalt
are mixed,

10. Boron-carbide-tungsten-boride- and boron-carbide-tungsten-boride-titanium-boride shapes, free from transition-metal carbides and free hydrocarbon, obtainable by way of one of the above patent claims.